# EUROPEAN PATENT APPLICATION

(11) **EP 4 227 512 A1**
(43) Date of publication of application: **16.08.2023**
(21) Application number: 23156392.5
(22) Date of filing: 13.02.2023
(51) Int. Cl.: F02C 3/22, F02C 6/18, F02C 1/00, F02C 1/04

(54) **HYDROGEN-OXYGEN FUELED POWERPLANT WITH WATER AND HEAT RECOVERY**

(30) Priority: 11.02.2022 US 202217670080
(71) Applicant: Raytheon Technologies Corporation, Farmington, CT 06032 (US)
(72) Inventor: TERWILLIGER, Neil J., Cheshire, 06410 (US); LEDWITH, Jr., Walter A., Marlborough, 06447 (US); MA, David L., Avon, 06001 (US); STAUBACH, Joseph B., Colchester, 06415 (US)
(74) Representative: Dehns

(57) **Abstract**

A powerplant (20) for an aircraft includes an engine (24) and an energy recovery system (70). The engine (24) includes an engine combustor (30), an engine turbine (32), a flowpath (38) and a fluid delivery system (26). The flowpath (38) extends out of the engine combustor (30) and through the engine turbine (32). The fluid delivery system (26) is configured to provide fluid hydrogen and fluid oxygen for combustion within the engine combustor (30) to produce combustion products within the flowpath (38). The energy recovery system (70) includes an energy recovery system condenser (106), an energy recovery system pump (110), an energy recovery system evaporator (112) and an energy recovery system turbine (102). The energy recovery system pump (110) is configured to pump liquid water from the energy recovery system condenser (106) to the energy recovery system evaporator (112). The energy recovery system evaporator (112) is configured to transfer heat from the combustion products into the liquid water to evaporate at least some of the liquid water into water vapor to drive the energy recovery system turbine (102).

## Description

### BACKGROUND OF THE DISCLOSURE

### 1. Technical Field

This invention relates generally to a powerplant and, more particularly, to a powerplant for use with liquid hydrogen and liquid oxygen.

### 2. Background Information

As government emissions standards tighten, interest in alternative fuels for gas turbine engines continues to grow. There is interest, for example, in fueling a gas turbine engine with hydrogen (H₂) rather than a traditional hydrocarbon fuel such as kerosine to reduce greenhouse emissions. Whiles various hydrogen fueled gas turbine engines are known in the art, there is still room in the art for improvement.

### SUMMARY OF THE DISCLOSURE

According to a first aspect of the invention, a powerplant for an aircraft includes an engine and an energy recovery system. The engine includes an engine combustor, an engine turbine, a flowpath and a fluid delivery system. The flowpath extends out of the engine combustor and through the engine turbine. The fluid delivery system is configured to provide fluid hydrogen and fluid oxygen for combustion within the engine combustor to produce combustion products within the flowpath. The energy recovery system includes an energy recovery system condenser, an energy recovery system pump, an energy recovery system evaporator and an energy recovery system turbine. The energy recovery system pump is configured to pump liquid water from the energy recovery system condenser to the energy recovery system evaporator. The energy recovery system evaporator is configured to transfer heat from the combustion products into the liquid water to evaporate at least some of the liquid water into water vapor to drive the energy recovery system turbine.

According to another aspect of the invention, another powerplant for an aircraft includes an engine, a water recovery system and a flow circuit. The engine includes an engine combustor, an engine turbine, a flowpath and a fluid delivery system. The flowpath extends out of the engine combustor and through the engine turbine. The fluid delivery system is configured to provide fluid hydrogen and fluid oxygen for combustion within the engine combustor to produce combustion products within the flowpath. The water recovery system is configured to extract water from the combustion products within the flowpath. The water recovery system is also configured to direct the water to the engine combustor and/or the engine turbine. The flow circuit includes a circuit evaporator, a circuit turbine, a circuit condenser and a circuit pump. The circuit evaporator is arranged with the flowpath. The circuit evaporator is fluidly coupled with and between an outlet from the circuit pump and an inlet to the circuit turbine. The circuit condenser is fluidly coupled with and between an outlet from the circuit turbine and an inlet to the circuit pump.

According to another aspect of the invention, a method is provided during which a powerplant for an aircraft includes a first mechanical load, a second mechanical load, an engine combustor, an engine turbine and an energy recovery system. Fluid hydrogen is combusted with fluid oxygen within the engine combustor to provide combustion products. The combustion products are directed through the engine turbine to rotatably drive the first mechanical load. The energy recovery system is operated to rotatably drive the second mechanical load using heat energy recovered from the combustion products.

The energy recovery system may be configured as or otherwise include a Rankine cycle system.

The powerplant may also include a water recovery system. Water may be extracted from the combustion products using the water recovery system. A component of the powerplant may be cooled using at least some of the water.

The flow circuit may be fluidly coupled with the water recovery system.

A water recovery system may be included and configured to condense and extract water from the combustion products to provide the water to a component of the engine.

The water extracted by the water recovery system may be directed through a second pump, a second evaporator and/or a turboexpander to the component.

The water extracted by the water recovery system may be directed through the energy recovery system pump, the energy recovery system evaporator and/or the energy recovery system turbine to the component.

The energy recovery system may be configured to receive at least some of the liquid water from the water recovery system.

The component may be configured as or otherwise include the engine combustor.

The component may be configured as or otherwise include the engine turbine.

The water recovery system may be configured to provide at least some of the water to the component as liquid water.

The water recovery system may be configured to provide at least some of the water to the component as water vapor.

The energy recovery system may be fluidly coupled with the water recovery system.

The energy recovery system may be fluidly discrete from the water recovery system.

The energy recovery system may be configured to bleed out at least some of the water vapor and/or the liquid water.

The fluid hydrogen directed to the engine combustor may be or otherwise include liquid hydrogen. In addition or alternatively, the fluid oxygen provided to the engine combustor may be or otherwise include liquid oxygen.

A mechanical load may be included and coupled to and rotatably driven by the energy recovery system turbine.

The energy recovery system may be configured as a closed loop system.

A propulsor rotor may be included and coupled to and rotatably driven by the engine turbine.

An electric generator with a generator rotor may be included and coupled to and rotatably driven by the engine turbine.

The present invention, including any aspects thereof, may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a powerplant for an aircraft.
FIG. 2 is a schematic illustration of a portion of the powerplant engine system configured with a water recovery system and an energy recovery system.
FIG. 3 is a schematic illustration of a liquid water circuit servicing various components of a power turbine.
FIG. 4 is a schematic illustration of a water vapor circuit servicing various components of the power turbine.
FIG. 5 is a schematic illustration of a portion of the powerplant engine system configured with the water recovery system and the energy recovery system in another arrangement.
FIG. 6 is a schematic illustration of a portion of the powerplant engine system configured with the water recovery system and the energy recovery system in another arrangement.
FIG. 7 is a schematic illustration of a portion of the powerplant engine system configured without the water recovery system.
FIG. 8 is a schematic illustration of a portion of the powerplant engine system configured with the with the water recovery system and the energy recovery system in another arrangement.
FIG. 9 is a schematic illustration of a portion of the powerplant engine system configured with the with the water recovery system and the energy recovery system in still another arrangement.

### DETAILED DESCRIPTION

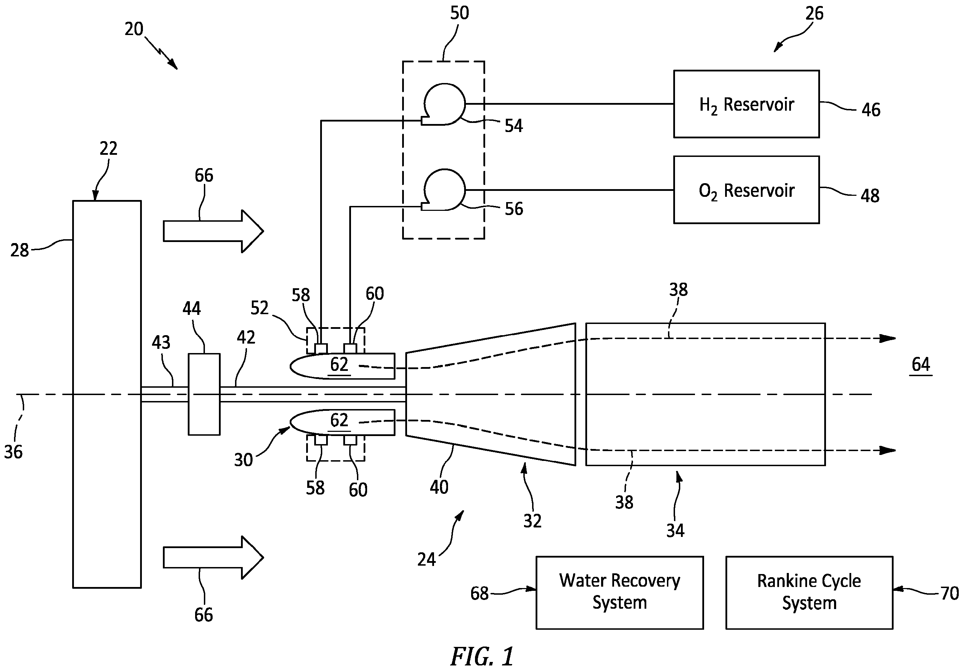

FIG. 1 is a schematic illustration of a powerplant 20 for an aircraft such as, but not limited to, an airplane. This powerplant 20 may be configured as, or otherwise included as part of, a propulsion system for the aircraft. The powerplant 20 may also or alternatively be configured as, or otherwise included as part of, an electrical power system for the aircraft. The present disclosure, however, is not limited to aircraft applications. The powerplant 20, for example, may alternatively be configured as, or otherwise included as part of, a propulsion system and/or an electrical power system for another type of vehicle. The powerplant 20 may still alternatively be configured as, or otherwise included as part of, an industrial electrical power system.

The powerplant 20 may be configured as a non-hydrocarbon powerplant / a hydrocarbon free powerplant; e.g., a powerplant that does not use (or require) hydrocarbon fuel for powerplant operation such as, but not limited to, kerosine, jet fuel, etc. The powerplant 20 of FIG. 1, for example, is configured as a hydrogen-oxygen burning powerplant. More particularly, the powerplant 20 of FIG. 1 is configured as a hydrolox powerplant that burns liquid hydrogen with liquid oxygen, as opposed to other hydrogen burning powerplants which burn hydrogen with air. Combusting the hydrogen with the oxygen within the hydrolox powerplant may eliminate nitrous oxide emissions, whereas nitrous oxide emissions are present when combusting hydrogen with compressed air, for example.

The powerplant 20 includes a mechanical load 22 and a powerplant engine 24 for rotatably driving the mechanical load 22. The powerplant 20 also includes a powerplant fluid delivery system 26 (e.g., a propellant system, a hydrogen-oxygen system, etc.) for servicing (e.g., fueling, etc.) the engine 24.

The mechanical load 22 may be configured as or otherwise include at least one driven rotor 28. The mechanical load 22, for example, may be configured as a bladed propulsor rotor for the aircraft propulsion system. Examples of the propulsor rotor include, but are not limited to, a propeller for a propeller engine (e.g., a turboprop engine), a fan for a ducted fan engine (e.g., a turbofan engine), and an open rotor for an open rotor engine (e.g., a pusher fan engine, an open tractor rotor engine, etc.). The mechanical load 22 may also or alternatively be configured as a generator rotor in an electrical power generator for the power system. The present disclosure, however, is not limited to the foregoing exemplary mechanical loads nor the foregoing exemplary powerplant configurations.

The engine 24 includes an engine combustor 30, an engine power turbine 32 (e.g., a free turbine) and an engine exhaust 34. The combustor 30, the power turbine 32 and the exhaust 34 of FIG. 1 may be arranged sequentially along an axial centerline 36 of the engine 24, which axial centerline 36 may also be a rotational axis for the power turbine 32 as well as the mechanical load 22 in FIG. 1. The engine 24 of FIG. 1 also includes a core flowpath 38. This core flowpath 38 may start at / within the combustor 30, and projects out of the combustor 30 and sequentially through the power turbine 32 and the exhaust 34. The core flowpath 38 thereby fluidly couples the power turbine 32 with the combustor 30 and the exhaust 34, where the power turbine 32 is downstream of the combustor 30 along the core flowpath 38, and where the exhaust 34 is downstream of the power turbine 32 along the core flowpath 38.

The power turbine 32 includes a bladed power turbine rotor 40 with one or more stages along the axial centerline 36. The power turbine rotor 40 is connected to the driven rotor 28 through a drivetrain. The drivetrain of FIG. 1 includes an engine shaft 42, a load shaft 43 and a geartrain 44; e.g., an epicyclic geartrain. The engine shaft 42 connects the power turbine rotor 40 to the geartrain 44. The load shaft 43 connects the geartrain 44 to the driven rotor 28. The power turbine rotor 40 may thereby rotatably drive the driven rotor 28 through the drivetrain and its elements 42-44. The geartrain 44 may be configured as a speed reduction device such that, for example, a rotational speed of the power turbine rotor 40 and its engine shaft 42 may be different (e.g., greater) than a rotational speed of the driven rotor 28 and its load shaft 43. Of course, in other embodiments, the geartrain 44 may be omitted and the power turbine rotor 40 may directly drive the driven rotor 28.

The fluid delivery system 26 of FIG. 1 includes a hydrogen reservoir 46, an oxygen reservoir 48, a pump system 50 and an injection system 52. The hydrogen reservoir 46 is configured to store (e.g., contain and hold) a quantity of fluid hydrogen; e.g., fuel. Within the hydrogen reservoir 46, this fluid hydrogen may be in a form of entirely (e.g., only) or substantially (e.g., at least 95%) liquid hydrogen; e.g., when the hydrogen reservoir 46 is substantially full. The hydrogen reservoir 46 may be configured as or otherwise include a container; e.g., a tank, a cylinder, a pressure vessel, a bladder, etc. The hydrogen reservoir 46 includes an outlet.

The oxygen reservoir 48 is configured to store (e.g., contain and hold) a quantity of fluid oxygen (e.g., O₂); e.g., oxidizer. Within the oxygen reservoir 48, this fluid oxygen may be in a form of entirely (e.g., only) or substantially (e.g., at least 95%) liquid oxygen; e.g., when the oxygen reservoir 48 is substantially full. The oxygen reservoir 48 may be configured as or otherwise include a container; e.g., a tank, a cylinder, a pressure vessel, a bladder, etc. The oxygen reservoir 48 includes an outlet.

The pump system 50 includes one or more pumps 54 and 56. One or more of these pumps 54 and/or 56 may be configured as or otherwise include a mechanical pump such as, but not limited to, a turbopump. One or more of the pumps 54 and/or 56 may also or alternatively be configured as or otherwise include an electrical pump.

The hydrogen pump 54 is fluidly coupled between the hydrogen reservoir 46 and the combustor 30 and, more particularly, the injection system 52. An inlet to the hydrogen pump 54, for example, is fluidly coupled with and downstream of from the hydrogen reservoir outlet. An outlet from the hydrogen pump 54 is fluidly coupled with and upstream of a hydrogen inlet to the injection system 52. The hydrogen pump 54 is configured to draw the fluid hydrogen out of the hydrogen reservoir 46 through its hydrogen pump inlet, pressurize the fluid hydrogen within the hydrogen pump 54, and direct the pressurized fluid hydrogen to the combustor 30 via the injection system 52; e.g., through one or more fluid hydrogen injectors 58. The fluid hydrogen directed out of the hydrogen pump 54 may remain in the form of entirely (e.g., only) or substantially (e.g., at least 95%) liquid hydrogen, where this liquid hydrogen is provided to the fluid hydrogen injectors 58.

The oxygen pump 56 is fluidly coupled between the oxygen reservoir 48 and the combustor 30 and, more particularly, the injection system 52. An inlet to the oxygen pump 56, for example, is fluidly coupled with and downstream of the oxygen reservoir outlet. An outlet from the oxygen pump 56 is fluidly coupled with and upstream of an oxygen inlet to the injection system 52. The oxygen pump 56 is configured to draw the fluid oxygen out of the oxygen reservoir 48 through its oxygen pump inlet, pressurize the fluid oxygen within the oxygen pump 56, and direct the pressurized fluid oxygen to the combustor 30 via the injection system 52; e.g., through one or more fluid oxygen injectors 60. The fluid oxygen directed out of the oxygen pump 56 may remain in the form of entirely (e.g., only) or substantially (e.g., at least 95%) liquid oxygen, where this liquid oxygen is provided to the fluid oxygen injectors 60.

During operation of the powerplant 20 of FIG. 1, the pump system 50 directs pressurized fluid hydrogen and pressurized fluid oxygen to the injection system 52. The injection system 52 injects the pressurized fluid hydrogen and the pressurized fluid oxygen into a (e.g., annular) combustion chamber 62 of the combustor 30. The injected hydrogen and the injected oxygen provide a hydrogen-oxygen mixture which is ignited within the combustion chamber 62 to produce combustion products within the combustion chamber 62 / the core flowpath 38. These combustion products may be water (H₂O) vapor. Alternatively, the combustion products may include a combination of water vapor with gaseous oxygen (O₂) and/or gaseous hydrogen (H₂) where, for example, the injected hydrogen and/or the injected oxygen is only partially combusted.

The combustion products flow along the core flowpath 38 out of the combustor 30 and through the power turbine 32 causing the power turbine rotor 40 to rotate. The combustion products are subsequently exhausted from the powerplant 20 and its engine 24 through the exhaust 34 into an external environment 64 (e.g., an environment outside of and around the powerplant 20 / the aircraft), which exhausted combustion products may provide powerplant thrust. The rotation of the power turbine rotor 40 drives rotation of the mechanical load 22 and its driven rotor 28. Where the driven rotor 28 is configured as the propulsor rotor, the rotation of the driven rotor 28 may propel another airflow 66 (e.g., a bypass airflow) along and/or external to the powerplant 20 and its engine 24 to provide additional powerplant thrust. Where the driven rotor 28 is configured as the generator rotor, the rotation of the driven rotor 28 may facilitate generation of electricity by the electrical power generator.

The combustion of the fluid hydrogen with the fluid oxygen within the combustor 30 may produce the combustion products with relatively high temperatures and relatively high pressures. While the relatively high combustion product pressures may facilitate an increase in powerplant power and/or powerplant efficiency, the relatively high combustion product temperatures may subject one or more components of the engine 24 along the core flowpath 38 to relatively high thermal stresses and/or thermal degradation. Furthermore, exhausting combustion products with relatively high temperatures wastes heat energy. Therefore, to provide engine component cooling and/or waste heat recovery, the powerplant 20 is configured with / further includes a water recovery system 68 and/or a heat energy recovery system such as, but not limited to, a Rankine cycle system 70.

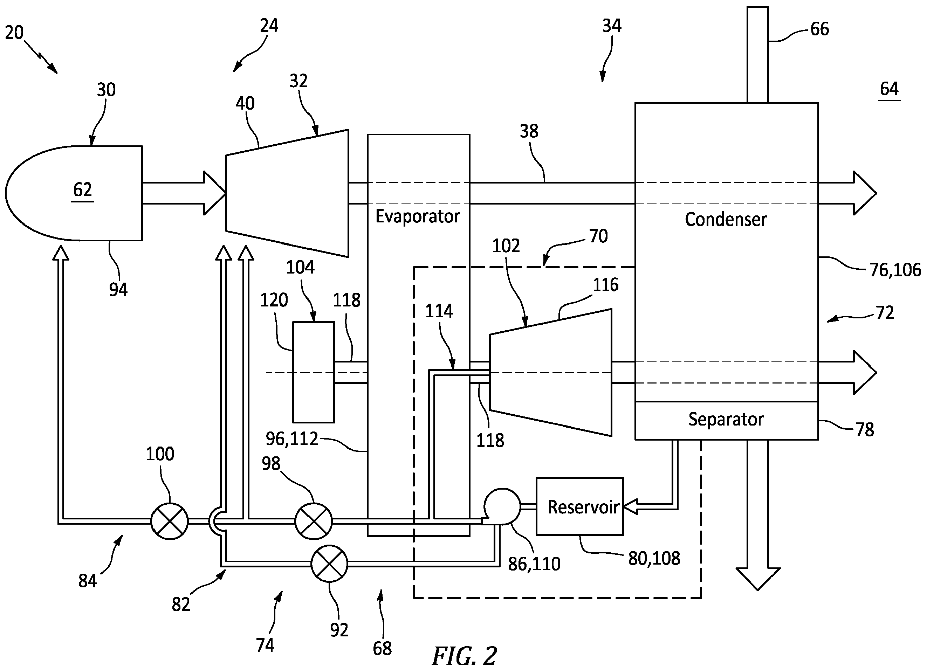

Referring to FIG. 2, the water recovery system 68 includes a water extraction system 72 configured to extract the water from the combustion products. The water recovery system 68 includes a water processing system 74 configured to receive and collect and/or otherwise process the water extracted by the water extraction system 72.

The water extraction system 72 includes a water extraction system (WES) condenser 76 and a water extraction system (WES) water separator 78. The WES condenser 76 is arranged with (e.g., within) the core flowpath 38 downstream of the combustor 30 and the power turbine 32; e.g., within the exhaust 34. The WES condenser 76 is configured to condense the water vapor within the combustion products into liquid water. For example, as the combustion products flow through and/or about the WES condenser 76, the WES condenser 76 may transfer heat energy from the relatively warm combustion products into a relatively cool fluid; e.g., the bypass airflow (e.g., 66), ambient air in the environment 64 outside of the powerplant 20, fuel, lubricant, hydraulic fluid, etc. This transfer of the heat energy out of the combustion products cools the combustion products such that at least some (or all) of the water in the combustion products change phase from gas to liquid. Following this phase change, the WES water separator 78 at least partially or completely separates the liquid water from the rest of the gaseous combustion products. Various types and configurations of liquid-gas water separators are known in the art, and the present disclosure is not limited to any particular ones thereof.

The water processing system 74 includes a water processing system (WPS) water reservoir 80 and one or more water processing system (WPS) water flow circuits 82 and 84. The WPS water reservoir 80 is fluidly coupled with and downstream of the water extraction system 72 and its WES water separator 78. An inlet to the WPS water reservoir 80, for example, is fluidly coupled with an outlet from the water extraction system 72; e.g., an outlet from the WES water separator 78. The WPS water reservoir 80 is configured to contain and hold at least some or all of the water extracted from the combustion products; e.g., the water received from the water extraction system 72. The WPS water reservoir 80, for example, may be configured as or otherwise include a container such as, but not limited to, a tank, a cylinder, a pressure vessel and/or a bladder.

The WPS water flow circuits 82 and 84 are fluidly coupled (e.g., in parallel) with and downstream of the WPS water reservoir 80. An inlet to the liquid water circuit 82 and an inlet to the water vapor circuit 84, for example, may be fluidly coupled (e.g., in parallel) with an outlet from the WPS water reservoir 80 through a water processing system (WPS) flow regulator 86; e.g., a pump or a compressor. The liquid water circuit 82 is fluidly coupled with and upstream of at least one component of the powerplant 20 and, more particularly, its engine 24; e.g., the power turbine 32. An outlet from the liquid water circuit 82, for example, may be fluidly coupled with a (e.g., cooling) circuit inlet to the power turbine 32. The water vapor circuit 84 is fluidly coupled with and upstream of one or more components of the powerplant 20 and, more particularly, its engine 24; e.g., the combustor 30 and/or the power turbine 32. An outlet from the water vapor circuit 84, for example, may be fluidly coupled with a (e.g., cooling) circuit inlet to the combustor 30 and/or a (e.g., cooling) circuit inlet to the power turbine 32.

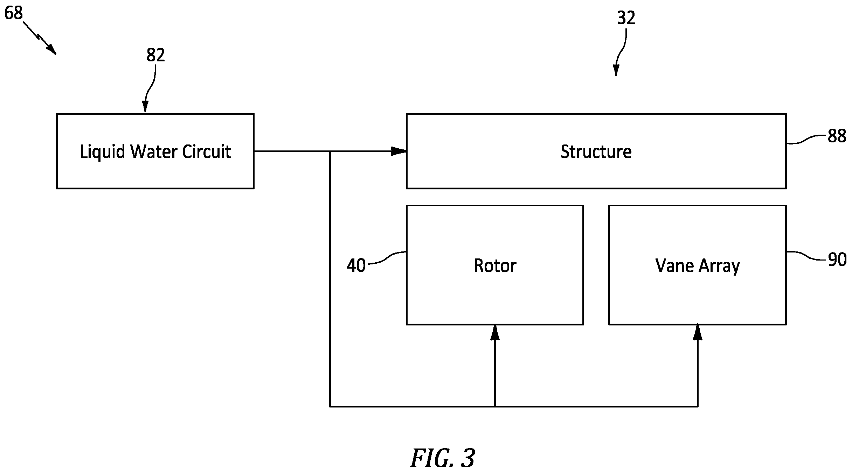

The liquid water circuit 82 of FIG. 2 is configured to receive pressurized liquid water from the WPS water reservoir 80 through the WPS flow regulator 86. The liquid water circuit 82 is configured to provide this pressurized liquid water to the power turbine 32 through its circuit inlet. At the power turbine 32, referring to FIG. 3, the liquid water may be used for cooling the power turbine rotor 40. The liquid water may also or alternatively be used for cooling a structure 88 circumscribing the power turbine rotor 40; e.g., a turbine case, a turbine blade outer air seal (BOAS), etc. The liquid water may also or alternatively be used for cooling one or more stator vane arrays 90 within the power turbine 32.

Referring to FIG. 2, the liquid water circuit 82 may include a liquid water circuit (LWC) flow regulator 92; e.g., a control valve. This LWC flow regulator 92 is configured to selectively flow and/or meter the water directed from the WPS water reservoir 80 to the power turbine 32. The LWC flow regulator 92, for example, may stop or further restrict the flow of water when the power turbine 32 is subject to relatively low combustion product temperatures. The LWC flow regulator 92, by contrast, may open or further permit (e.g., un-restrict) the flow of water when the power turbine 32 is subject to relatively high combustion product temperatures. Note, providing the water to the power turbine 32 as a liquid versus a gas may increase cooling of the power turbine 32. More particularly, a heat of vaporization of the liquid water to water vapor may provide enhance cooling for the power turbine 32.

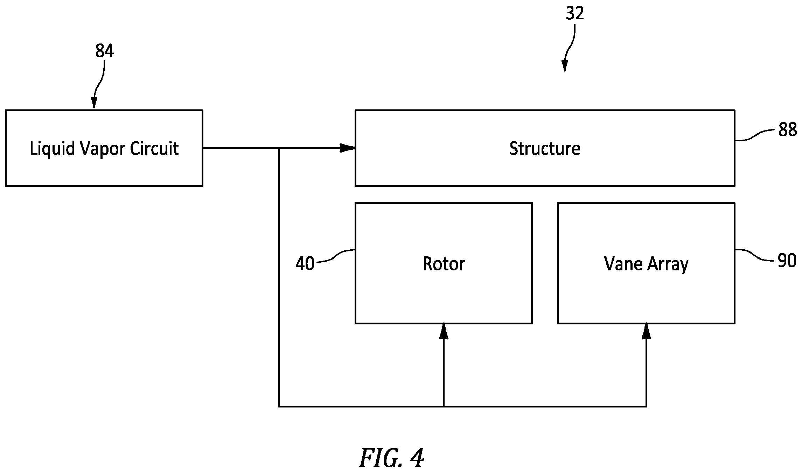

The water vapor circuit 84 of FIG. 2 is configured to receive pressurized liquid water from the WPS water reservoir 80 through the WPS flow regulator 86. The water vapor circuit 84 is configured to facilitate a phase change of at least some or all of the pressurized liquid water into pressurized water vapor. The water vapor circuit 84 is configured to provide this pressurized water vapor to the combustor 30 through its circuit inlet and/or to the power turbine 32 through its circuit inlet. At the combustor 30, the water vapor may be directed into a cooling circuit in a wall 94 of the combustor 30 for cooling the combustor wall 94 and/or injected into the combustion chamber 62. At the power turbine 32, referring to FIG. 4, the water vapor may be used for cooling the power turbine rotor 40. The water vapor may also or alternatively be used for cooling the structure 88 circumscribing the power turbine rotor 40; e.g., the turbine case, the turbine blade outer air seal (BOAS), etc. The water vapor may also or alternatively be used for cooling water vapor the one or more stator vane arrays 90 within the power turbine 32.

To facilitate the phase change of the water from the liquid to the gas, the water vapor circuit 84 of FIG. 2 includes a water processing system (WPS) evaporator 96. This WPS evaporator 96 is arranged with (e.g., within) the core flowpath 38 downstream of the combustor 30 and the power turbine 32; e.g., within the exhaust 34. The WPS evaporator 96 is configured to vaporize at least some (or all) of the liquid water received from the WPS water reservoir 80 into water vapor. For example, as the liquid water flows through and/or about the WPS evaporator 96, the WPS evaporator 96 may transfer heat energy from the relatively warm combustion products into the relatively cool liquid water. This transfer of the heat energy into the liquid water heats the liquid water such that at least some (or all) of the liquid water received from the WPS water reservoir 80 changes phase from liquid to gas.

The water vapor circuit 84 may include one or more water vapor circuit (WVC) flow regulators 98 and 100; e.g., control valves. These WVC flow regulators 98 and 100 are configured to selectively flow and/or meter the water directed from the WPS water reservoir 80 to the combustor 30 and/or the power turbine 32. The WVC flow regulators 98 and 100, for example, may stop or further restrict the flow of water when the combustor 30 and/or the power turbine 32 are subject to relatively low combustion product temperatures. The WVC flow regulators 98 and 100, by contrast, may open or further permit (e.g., un-restrict) the flow of water when the combustor 30 and/or the power turbine 32 are subject to relatively high combustion product temperatures.

The Rankine cycle system 70 of FIG. 2 includes a Rankine cycle system (RCS) turbine 102 configured to rotatably drive a mechanical load 104. This Rankine cycle system 70 also includes a Rankine cycle system (RCS) condenser 106, a Rankine cycle system (RCS) water reservoir 108, a Rankine cycle system (RCS) flow regulator 110 (e.g., pump or a compressor) and a Rankine cycle system (RCS) evaporator 112. In the Rankine cycle system 70 of FIG. 2, the RCS condenser 106 and the WES condenser 76 are configured together as a common single or multi-circuit condenser where the Rankine cycle system 70 also includes the water separator 78; however, the RCS condenser 106 may alternatively be configured (e.g., physically and/or fluidly) discrete from the WES condenser 76. The RCS water reservoir 108 and the WPS water reservoir 80 are configured together as a common water reservoir; however, the RCS water reservoir 108 may alternatively be configured (e.g., physically and/or fluidly) discrete from the WPS water reservoir 80. The RCS flow regulator 110 and the WPS flow regulator 86 are configured together as a common flow regulator; however, the RCS flow regulator 110 may alternatively be configured (e.g., physically and/or fluidly) discrete from the WPS flow regulator 86. The RCS evaporator 112 and the WPS evaporator 96 are configured together as a common single or multi-circuit evaporator; however, the RCS evaporator 112 may alternatively be configured (e.g., physically and/or fluidly) discrete from the WPS evaporator 96.

The RCS turbine 102 is fluidly coupled between the evaporator 96, 112 and the condenser 76, 106. An inlet to the RCS turbine 102, for example, is fluidly coupled with and downstream from an outlet from the evaporator 96, 112. An outlet from the RCS turbine 102 is fluidly coupled with and upstream of an inlet to the condenser 76, 106. With this arrangement, the Rankine cycle system 70 has a flow circuit 114 which extends sequentially through the powerplant components 108, 110, 112, 102 and 106.

The RCS turbine 102 includes a bladed RCS turbine rotor 116. This RCS turbine rotor 116 is connected to and rotatably drives the mechanical load 104 through a drivetrain; e.g., a shaft 118. The mechanical load 104 may be different than (or alternatively the same as) the mechanical load 22 of FIG. 1 driven by the power turbine 32. The mechanical load 104 of FIG. 2 may be configured as or otherwise include at least one driven rotor 120. The mechanical load 104, for example, may be configured as a bladed propulsor rotor. The mechanical load 104 may also or alternatively be configured as a generator rotor in an electrical power generator. The mechanical load 104 may also or alternatively be configured as a driver for one or more of the flow regulators; e.g., pumps. The present disclosure, however, is not limited to the foregoing exemplary mechanical loads.

During operation of the Rankine cycle system 70 of FIG. 2, the water extraction system 72 and its condenser 76, 106 receives the combustion products from the power turbine 32 and water vapor from the RCS turbine 102. The water extraction system 72 extracts at least some (or all) of the water from the combustion products and/or condenses at least some (or all) of the water vapor to provide liquid water to the water reservoir 80, 108. At least some (or all) of the liquid water is directed from the water reservoir 80, 108 to the evaporator 96, 112 by the flow regulator 86, 110. The evaporator vaporizes at least some (or all) of the liquid water into water vapor. This water vapor is directed from the evaporator 96, 112 back to the condenser 76, 106 through the RCS turbine 102, where the flow of the water vapor through the RCS turbine 102 rotates the RCS turbine rotor 116. This rotation of the RCS turbine rotor 116 drives rotation of the mechanical load 104 and its driven rotor 120. The Rankine cycle system 70 may thereby extract heat energy from the combustion products for use in powering the mechanical load 104. Inclusion of the Rankine cycle system 70 may therefore further increase efficiency of the powerplant 20.

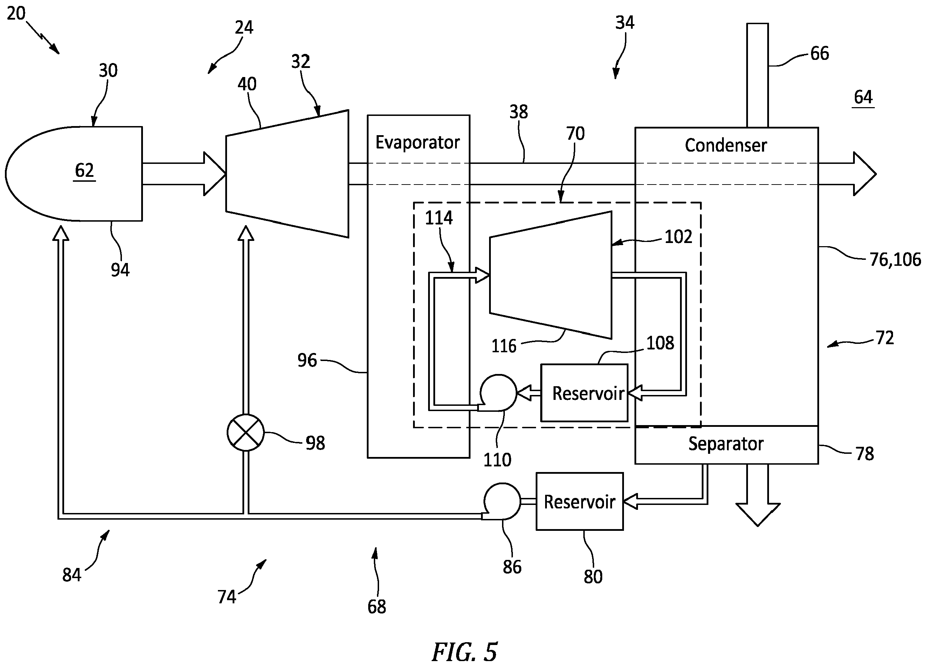

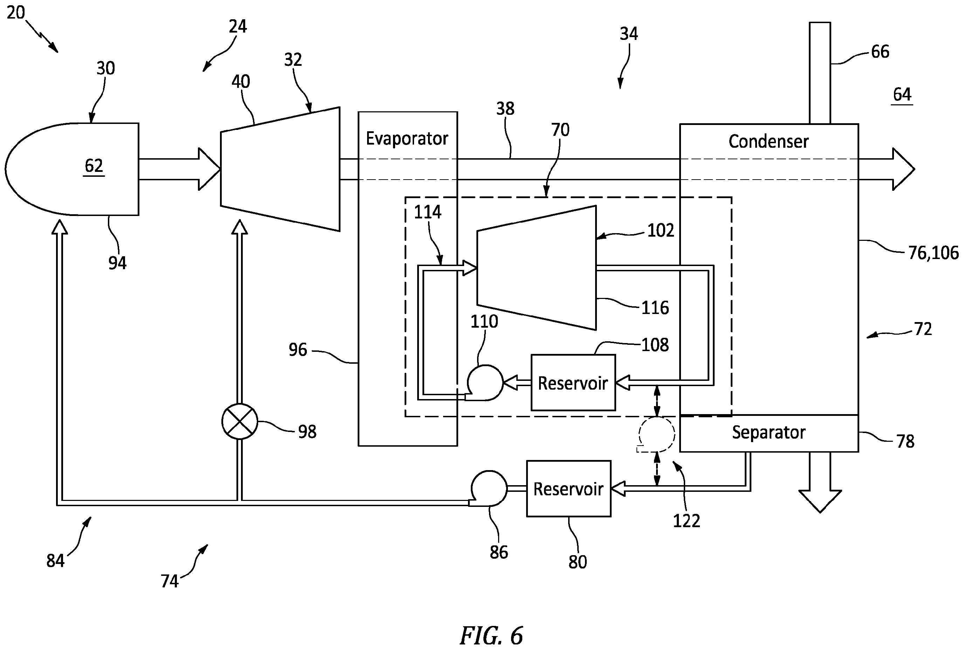

In some embodiments, the flow circuit 114 for the Rankine cycle system 70 may be configured as a (e.g., partially) open loop flow circuit. For example, while some of the water output from the Rankine cycle system 70 may be recaptured by the water recovery system 68, some of the water output from the Rankine cycle system 70 may also be exhausted from the powerplant 20 through the exhaust 34 as water vapor. In other embodiments, referring to FIG. 5, the flow circuit 114 of the Rankine cycle system 70 may be configured as a closed loop flow circuit. Such a closed loop flow circuit is fluidly discrete from the water recovery system 68. In still other embodiments, referring to FIG. 6, the powerplant 20 may include a fluid coupler 122 between the Rankine cycle system 70 and the water recovery system 68. The fluid coupler 122 may selectively fluidly couple the flow circuit 114 of the Rankine cycle system 70 to the water recovery system 68 and/or vice versa, for example, to change out at least some or all of the working fluid (e.g., water) within the Rankine cycle system 70.

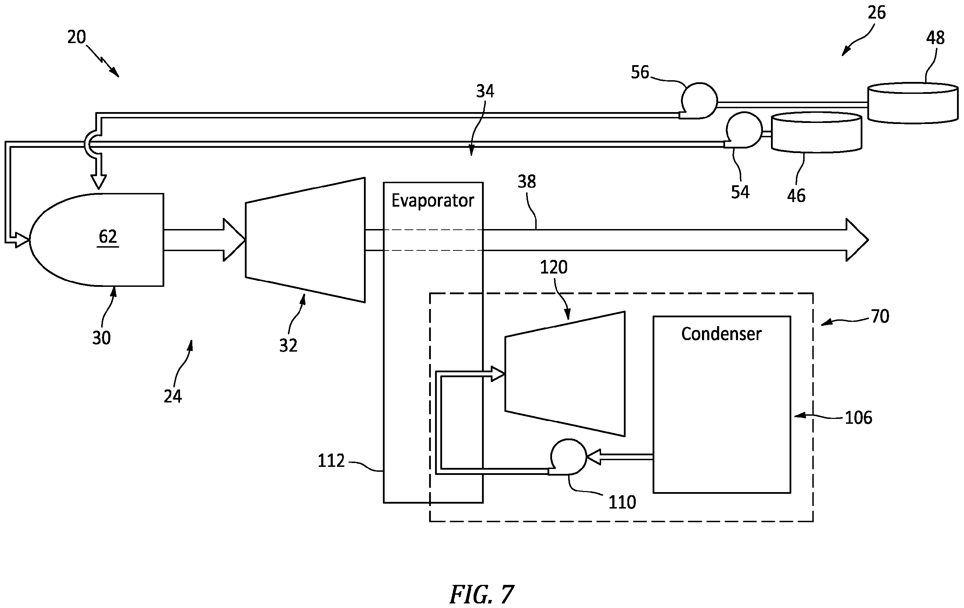

In some embodiments, referring to FIG. 7, the powerplant 20 may be configured without the water recovery system 68. In such embodiments, the Rankine cycle system 70 may be configured as a closed loop system.

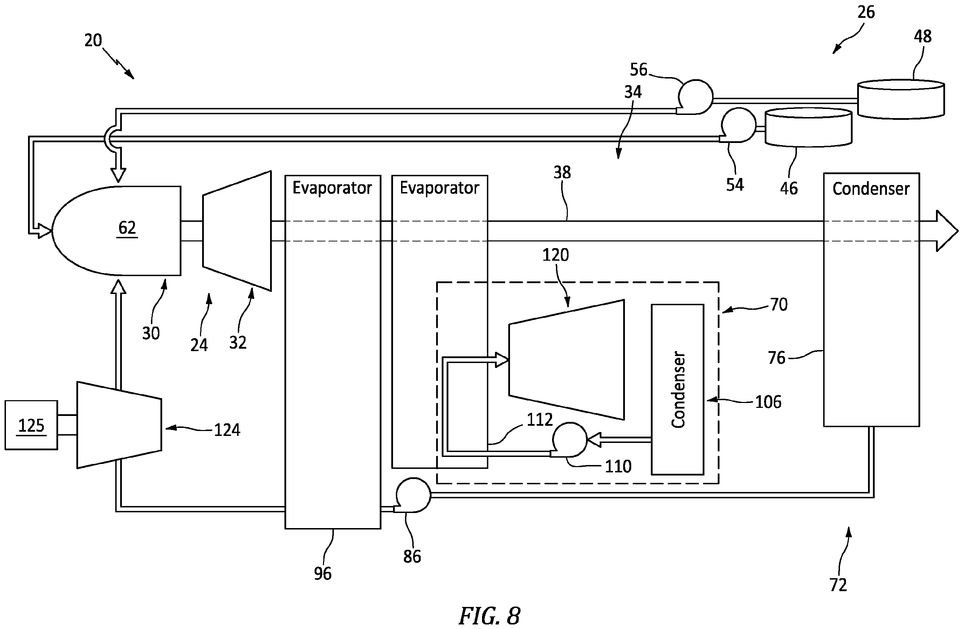

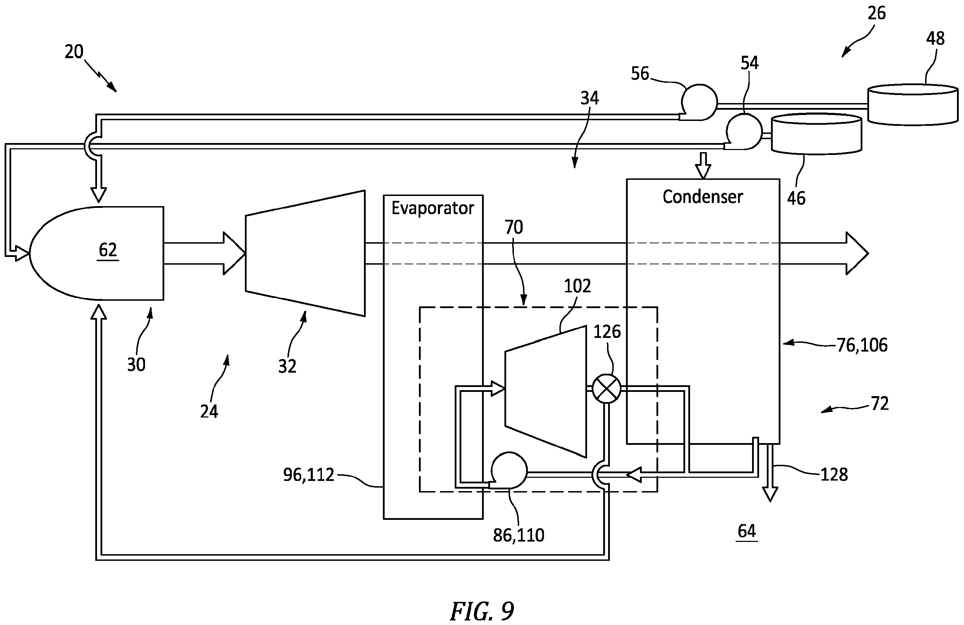

In some embodiments, referring to FIGS. 8 and 9, the powerplant 20 may be configured with a flow regulator (e.g., a pump), an evaporator and/or a turboexpander between the water extraction system 72 and the component which receives water (e.g., liquid water and/or water vapor) from the water recovery system 68. For example, the WPS flow regulator 86 of FIG. 8 directs the liquid water provided by the water extraction system 72 to the WPS evaporator 96. The WPS evaporator 96 transfers heat energy from the combustion product within the core flowpath 38 to the liquid water, where the heat energy at least partially evaporates the liquid water into water vapor. This water vapor is directed through a turboexpander 124 to extract mechanical power from the water vapor before being provided to the engine component; e.g., the engine combustor 30 or the power turbine 32. The turboexpander 124, for example, may drive a mechanical load 125 such as, but not limited to, any of the mechanical loads described above. In another example, referring to FIG. 9, some of the water vapor exhausted form the RCS turbine 102 is bled from the Rankine cycle system 70 via a flow regulator 126 (e.g., a bleed valve) and directed to the engine component; e.g., the engine combustor 30 or the power turbine 32. In addition or alternatively, some of the extracted water may be selectively vented to the external environment 64 via a vent circuit 128.

The water recovery system 68 and/or the Rankine cycle system 70 may be included with various turbine engines other than the one described above. The water recovery system 68 and/or the Rankine cycle system 70, for example, may be included in a geared turbine engine where a gear train connects one or more shafts to one or more rotors. Alternatively, the water recovery system 68 and/or the Rankine cycle system 70 may be included in a turbine engine configured without a gear train. The water recovery system 68 and/or the Rankine cycle system 70 may be included in a geared or non-geared turbine engine configured with a single spool (e.g., see FIG. 1), with two spools, or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU) or an industrial gas turbine engine. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A powerplant (20) for an aircraft, comprising:
an engine (24) comprising an engine combustor (30), an engine turbine (32), a flowpath (38) and a fluid delivery system (26), the flowpath (38) extending out of the engine combustor (30) and through the engine turbine (32), and the fluid delivery system (26) configured to provide fluid hydrogen and fluid oxygen for combustion within the engine combustor (30) to produce combustion products within the flowpath (38); and
an energy recovery system (70) comprising an energy recovery system condenser (106), an energy recovery system pump (110), an energy recovery system evaporator (112) and an energy recovery system turbine (102), the energy recovery system pump (110) configured to pump liquid water from the energy recovery system condenser (106) to the energy recovery system evaporator (112), and the energy recovery system evaporator (112) configured to transfer heat from the combustion products into the liquid water to evaporate at least some of the liquid water into water vapor to drive the energy recovery system turbine (102).

2. The powerplant (20) of claim 1, wherein the energy recovery system (70) comprises a Rankine cycle system (70).

3. The powerplant (20) of claim 1 or 2, further comprising a water recovery system (68) configured to condense and extract water from the combustion products to provide the water to a component of the engine (24).

4. The powerplant (20) of claim 3, wherein:
the water extracted by the water recovery system (68) is directed to the component through a second pump (86), a second evaporator (96) and/or a turboexpander (124); or
the water extracted by the water recovery system (68) is directed to the component through the energy recovery system pump (110), the energy recovery system evaporator (112) and/or the energy recovery system turbine (102).

5. The powerplant (20) of any of claims 3 or 4, wherein the energy recovery system (70) is configured to receive at least some of the liquid water from the water recovery system (68).

6. The powerplant (20) of any of claims 3 to 5, wherein the component comprises the engine combustor (30) or the engine turbine (32).

7. The powerplant (20) of any of claims 3 to 6, wherein the water recovery system (68) is configured to provide at least some of the water to the component as liquid water or water vapor.

8. The powerplant (20) of any of claims 3 to 7, wherein the energy recovery system (70) is fluidly coupled with, or fluidly discrete from, the water recovery system (68).

9. The powerplant (20) of any preceding claim, wherein the energy recovery system (70) is configured to bleed out at least some of the water vapor and/or the liquid water.

10. The powerplant (20) of any preceding claim, wherein the fluid hydrogen directed to the engine combustor (30) comprises liquid hydrogen and/or the fluid oxygen provided to the engine combustor (30) comprises liquid oxygen.

11. The powerplant (20) of any preceding claim, further comprising a mechanical load (104) coupled to and rotatably driven by the energy recovery system turbine (102).

12. The powerplant (20) of any preceding claim, wherein the energy recovery system (70) is configured as a closed loop system.

13. The powerplant (20) of any preceding claim, further comprising a propulsor rotor (28) coupled to and rotatably driven by the engine turbine (32).

14. The powerplant (20) of any preceding claim, further comprising an electric generator (28) with a generator rotor coupled to and rotatably driven by the engine turbine (32).

15. A method comprising:
providing a powerplant (20) for an aircraft, the powerplant (20) including a first mechanical load (22), a second mechanical load (104), an engine combustor (30), an engine turbine (32) and an energy recovery system (70);
combusting fluid hydrogen with fluid oxygen within the engine combustor (30) to provide combustion products;
directing the combustion products through the engine turbine (32) to rotatably drive the first mechanical load (22); and
operating the energy recovery system (70) to rotatably drive the second mechanical load (104) using heat energy recovered from the combustion products.
